# EUROPÄISCHE PATENTSCHRIFT

(11) **EP 2 136 044 B1**
(45) Veröffentlichungstag und Bekanntmachung des Hinweises auf die Patenterteilung: **02.06.2010**
(21) Anmeldenummer: 09004928.9
(22) Anmeldetag: 03.04.2009
(51) Int. Cl.: F01N 3/037, B01D 45/12

(54) **Partikelabschneider sowie Verfahren zur Abscheidung von Partikeln aus einem Abgasstrom einer Brennkraftmaschine**
Particle separator and method for separating particles from an exhaust gas flow of a combustion engine
Séparateur de particules et procédé de séparation de particules à partir d'un flux de gaz d'un moteur à combustion interne

(30) Priorität: 21.06.2008 DE 102008029521
(43) Veröffentlichungstag der Anmeldung: 23.12.2009
(73) Patentinhaber: MAN Nutzfahrzeuge AG, 80995 München (DE)
(72) Erfinder: Döring, Andreas, 80339 München (DE)

(56) Entgegenhaltungen:
- JP-A- 2005 330 346
- US-A- 2 942 687
- US-A- 5 281 245

## Beschreibung

Die Erfindung betrifft einen Partikelabscheider zur Abscheidung von Partikeln aus einem Abgasstrom einer Brennkraftmaschine nach dem Oberbegriff des Anspruchs 1 sowie ein Verfahren zur Abscheidung von Partikeln aus einem Abgasstrom einer Brennkraftmaschine nach dem Oberbegriff des Anspruchs 35.

Bei der dieselmotorischen Verbrennung, wie auch bei der ottomotorischen Direkteinspritzung, kommt es zur Emission von Partikeln, die unter anderem durch die unvollständige Verbrennung des Kraftstoffs entstehen und überwiegend aus hochoberflächigem Kohlenstoff bestehen. Um diesen hochoberflächigen Kohlenstoff zu verbrennen, schlägt die GB 895,990 A vor, diesen mit NO₂ als Oxidationsmittel anstelle von Sauerstoff zu verbrennen.

Weiter ist es aus der US 4,902,487 bekannt, Kohlenstoffpartikel an einem Filter abzuscheiden und anschließend durch NO₂ zu oxidieren. Zur Erzeugung des NO₂ kann z. B. gemäß der DE 28 320 02 das im Abgasstrom der Brennkraftmaschine enthaltene NO an einem platinhaltigen Katalysator zu NO₂ aufoxidiert werden. Der Anteil des NO₂ im Verhältnis zu den Gesamt-NOₓ wird dabei deutlich angehoben, wobei diese Reaktion ab ungefähr 180°C abläuft. Die Verbrennung der Partikel durch NO₂ beginnt dagegen bei Temperaturen ab 250°C. Eine Partikeloxidation in der Gasphase findet so gut wie nicht statt. Es ist hierzu eine Anlagerung an einem Feststoff nötig, um eine ausreichende Verweilzeit zu erzielen, was üblicherweise durch den Einsatz eines Partikelfilters realisiert wird.

Ein wesentlicher Nachteil einer derartigen Verfahrensführung besteht jedoch im hohen Abgasgegendruck, der durch den Filter verursacht wird. Dieser macht sich in einem erhöhten Kraftstoffverbrauch bemerkbar. Zudem setzen sich am Filter während des Betriebs auch nicht brennbare Bestandteile ab, wie z. B. Schmierölasche. Dadurch steigt der Abgasgegendruck immer weiter an, so dass der Filter regelmäßig und oft ausgetauscht werden muss, um einen noch weiter erhöhten Kraftstoffverbrauch sowie gegebenenfalls eine Schädigung der Brennkraftmaschine zu vermeiden. Desweiteren kann es bei einer unzureichenden Oxidation zu einer immer weiteren Belegung mit Ruß kommen, was schließlich zur Verstopfung des Filters führen kann.

Um diese Nachteile zu vermeiden, ist es aus der EP 1 072 765 B1 bereits bekannt, einen filterlosen Partikelabscheider einzusetzen, bei dem der Abgasstrom entlang einer strukturierten Oberfläche entlanggeführt sowie ständig umgelenkt wird, so dass sich die Partikel durch Thermophorese, Konvektion oder Diffusion vom Abgasstrom abscheiden können. Bei der thermophoretischen Partikelabscheidung, werden die Oberflächen des Partikelabscheiders gekühlt, so dass die Oberflächen deutlich kühler ist als der Abgasstrom sind. Dadurch scheiden sich Partikel an der Oberfläche ab und werden dort katalytisch mit dem, an einem Oxidationskatalysator erzeugten, NO₂ oxidiert. Bei einem nach dem Konvektionsprinzip ausgelegten Partikelabscheider weist dieser Oberflächenstrukturen auf dergestalt, dass die Partikel ständig zu Oberflächenkontakten gezwungen werden und sich dann an diesen Oberflächenstrukturen abscheiden und dort schließlich auch katalytisch mithilfe des NO₂ aufoxidiert werden können. Nach dem Diffusionsprinzip ausgelegte Partikelabscheider werden mit sogenannten Strömungstotzonen ausgelegt, z. B. im Windschatten von Leitblechen. In diesen Strömungstotzonen geht die Strömungsgeschwindigkeit gegen Null, so dass der Abgasstrom hier eine relativ lange Verweilzeit aufweist, so dass Partikel aus dem Abgasstrom in die Strömungstotzonen eindiffundieren können, um die dort lokal herrschenden Konzentrationsunterschiede auszugleichen. Nachteilig hierbei ist jedoch, dass sich die Abscheidung der Partikel durch Diffusion mit steigendem Partikeldurchmesser verschlechtert, so dass hier größere Partikel kaum oder nur sehr schlecht abgeschieden werden. Da die Partikelmasse, bei Annahme von kugelförmigen Partikeln, gemäß m_{Partikel} = 1/6 x d³ x n × ρ mit der dritten Potenz des Partikeldurchmessers d ansteigt, wird mit diesen Abscheidern nur eine relativ geringe Verminderung der Partikelmasse erzielt, das heißt es werden im Wesentlichen nur Feinstpartikel abgeschieden, was bedeutet, dass nach wie vor eine große Restpartikelmasse im Abgasstrom verbleibt, die die größere Partikelmasse ausmachen.

Demgegenüber ist es Aufgabe der vorliegenden Erfindung, einen Partikelabscheider sowie ein Verfahren zur Abscheidung von Partikeln aus einem Abgasstrom einer Brennkraftmaschine zur Verfügung zu stellen, mittels dem Partikel sämtlicher Größenordnungen, das heißt insbesondere Feinstpartikel und demgegenüber größere und/oder schwerere Grobpartikel auf einfache Weise zuverlässig aus dem Abgasstrom abgeschieden werden können.

Diese Aufgabe wird bezüglich des Partikelabscheiders gelöst mit den Merkmalen des Anspruchs 1. Bezüglich des Verfahrens wird diese Aufgabe gelöst mit den Merkmalen des Anspruchs 35. Vorteilhafte Ausgestaltungen hierzu sind Gegenstand der darauf rückbezogenen Unteransprüche.

Erfindungsgemäß sind im Partikelabscheider hinsichtlich der Strömungsverhältnisse unterschiedliche Strömungsbereiche ausgebildet, und zwar dergestalt, dass in den unterschiedlichen Strömungsbereichen im Wesentlichen Partikel unterschiedlicher, definierter Größenordnung und/oder Masse aus dem Abgasstrom abgeschieden werden können. Besonders bevorzugt sind hierbei im Partikelabscheider unterschiedliche, insbesondere räumlich voneinander getrennte Strömungsbereiche ausgebildet, um eine im Wesentlichen getrennte Abscheidung von zum einen Feinstpartikeln vorgegebener Größenordnung durch insbesondere Diffusion und zum anderen von demgegenüber definiert bzw. vorgegeben größeren und/oder schwereren Grobpartikeln aufgrund deren Massenträgheit zu erreichen. Besonders bevorzugt können sich die unterschiedlichen Strömungsbereiche dabei hinsichtlich der Strömungsgeschwindigkeit und/oder der Verweilzeit des Abgasstroms in den Strömungsbereichen unterscheiden.

Der erfindungsgemäße Grundgedanke besteht somit darin, eine Partikelabscheidung durch Diffusion mit einer Partikelabscheidung aufgrund der Massenträgheit bestimmter Partikel zu verknüpfen. Hierfür wird der Abgasstrom bevorzugt ständig umgelenkt, so dass z. B. Strömungstotzonen und/oder Turbulenzen erzeugt werden, die die Abscheidung der Feinstpartikel durch Diffusion gewährleisten. Zudem wird in anderen, bevorzugt räumlich abgetrennten Bereichen, die Strömungsgeschwindigkeit des Abgasstroms erhöht und dieser Abgasstrom anschließend bevorzugt abrupt umgelenkt, so dass die schwereren Partikel aufgrund ihrer höheren Massenträgheit dem Abgasstrom im Bereich der Umlenkung nicht mehr folgen können und im Wesentlichen geradeaus weiterfliegen. Stromab dieser Umlenkung sind dann bevorzugt Einrichtungen zum Auffangen der Partikel angebracht, insbesondere ein Totraumvolumen ausbildende, sacklochartige Speichervolumina bzw. Partikel-Auffang- und/oder Speichereinrichtungen, auf die nachfolgend noch näher eingegangen wird.

Damit der Partikelabscheider diese unterschiedlichen Strömungsbereiche ausbilden kann, weist dieser Mittel auf, mittels denen der Abgasstrom im Partikelabscheider beschleunigt und/oder verzögert und/oder umgelenkt werden kann. Hierfür gibt es verschiedenen Möglichkeiten. Besonders einfach und vorteilhaft ist es, die unterschiedlichen Strömungsbereiche durch z. B. unterschiedlich große freie Strömungsquerschnitte auszubilden. Die unterschiedlichen Strömungsbereiche können dabei in Strömungsrichtung des Abgasstromes gesehen hintereinander und/oder nebeneinander und/oder übereinander angeordnet sein, je nach konkretem Aufbau der Partikelabscheider. Besonders wesentlich ist es hierbei, insbesondere in Verbindung mit denjenigen Strömungsbereichen, die eine hohe Strömungsgeschwindigkeit des Abgasstromes aufweisen, dass zudem Mittel vorgesehen sind, mittels denen der Abgasstrom im Partikelabscheider wiederholt umgelenkt und/oder in Teilabgasströme aufgeteilt werden kann, um auf einfache Weise mit hoher Funktionssicherheit zu gewährleisten, dass die Grobpartikel in der zuvor beschriebenen Art und Weise durch ihre Massenträgheit aus dem Abgasstrom abgeschieden werden können. Besonders bevorzugt weist der Partikelabscheider hierzu eine Mehrzahl von Strömungskanälen auf, wobei wenigstens ein Teil der Strömungskanäle Durchströmöffnungen aufweist, über die wenigstens ein Teil der Durchströmkanäle strömungsverbunden ist. Mit einem derartigen, insbesondere eine wabenförmige Struktur ausbildenden Aufbau lassen sich Umlenkungen auf besonders einfache Weise darstellen.

Die unterschiedlichen Strömungsbereiche können dabei so angeordnet sein, dass wenigstens ein Teilabgasstrom des einen ersten Strömungsbereich mit definierter Strömungsgeschwindigkeit und/oder definierter Verweilzeit durchströmenden Abgasstroms in einen zweiten, hinsichtlich Strömungsgeschwindigkeit und/oder Verweilzeit des Abgasstromes zum ersten Strömungsbereich unterschiedlichen Strömungsbereich einströmt. Die Begrifflichkeit "erster" und "zweiter" in Verbindung mit den Strömungsbereichen bedeutet hier ausdrücklich keine Einschränkung auf lediglich zwei unterschiedliche Arten von Strömungsbereiche, auch wenn dies die bevorzugte Ausführungsform ist, sondern wird hier lediglich aus Übersichtlichkeitsgründen zur besseren Unterscheidung unterschiedlicher Strömungsbereiche so verwendet; selbstverständlich können auch mehr als zwei unterschiedliche Strömungsbereiche oder unterschiedliche Gruppen von gleichen Strömungsbereichen vorgesehen werden. Mit einem derartigen Überströmen in unterschiedliche Strömungsbereiche wird z. B. in Verbindung mit einem Hochgeschwindigkeits-Strömungsbereich, in dem der Abgasstrom mit einer vorgegebenen hohen Geschwindigkeit strömt durch das Umlenken bzw. Überströmen in einen demgegenüber eine niedrigere Strömungsgeschwindigkeit aufweisenden bzw. ausbildenden Strömungsbereich sichergestellt, dass zuerst aufgrund der hohen Geschwindigkeit und der dann abrupten Umlenkung in den benachbarten Strömungsbereich Grobpartikel aus dem Abgasstrom auf Grund ihrer Massenträgheit abgeschieden werden, während anschließend im dann demgegenüber "langsameren" Strömungsbereich eine Abscheidung von Feinstpartikeln durch Diffusion erfolgen kann. Besonders bevorzugt ist ein derartiger Aufbau, wie zuvor bereits angedeutet, wenn mehrere, vorzugsweise zwei Gruppen von unterschiedlichen Strömungsbereichen ausgebildet sind, wobei die Strömungsbereiche jeder Gruppe im Wesentlichen identisch ausgebildet sind. Ein derartiger Aufbau ist herstellungstechnisch einfach zu bewerkstelligen.

Besonders gute Abscheideergebnisse lassen sich mit einer konkreten Ausgestaltung erzielen, bei der die unterschiedlichen, benachbarten Strömungsbereiche in Strömungsrichtung gesehen wenigstens abschnittsweise so gegeneinander versetzt angeordnet sind, dass eine Ausströmöffnung eines ersten Strömungsbereiches eine Einströmöffnung eines zweiten, zum ersten Strömungsbereich unterschiedlichen Strömungsbereiches ausbildet. Mit einer derartigen Anordnung wird gleichzeitig ein kompakter und optimierter Aufbau eines Partikelabscheiders möglich, mit dem der Abgasstrom in der zuvor geschilderten Weise funktionssicher beschleunigt, verzögert und umgelenkt werden kann.

Für eine effektive und optimale Abscheidung der einzelnen Partikel ist es von besonderem Vorteil, dass jedem der unterschiedlichen Strömungsbereiche eine Partikel-Auffang- und/oder Speichervorrichtung zugeordnet ist, wobei diese insbesondere durch ein sacklochartiges Totraumvolumen gebildet ist, insbesondere durch einen sacklochartigen Strömungskanalabschnitt mit im Wesentlichen senkrecht zum Abgasstrom ausgerichteter Prallbodenwand. Die Partikel-Auffang- und/oder Speichervorrichtung kann dabei in Strömungsrichtung des Abgasstromes gesehen vor einer Einströmöffnung und/oder nach einer Ausströmöffnung des jeweiligen Strömungsbereiches angeordnet sein.

Die Oxidation der abgeschiedenen, kohlenstoffhaltigen Partikel kann durch Anhebung der Abgastemperatur und/oder mit Hilfe von, an einem Katalysator zur Oxidation von NO gebildetem, NO₂ erfolgen bzw. beschleunigt werden.

In den oben beschriebenen Partikel-Auffang- und/oder Speichereinrichtungen ist es möglich, eine große Menge von Partikeln, insbesondere von Ruß einzulagern. Unter Umständen kann es, insbesondere in Verbindung mit sacklochartigen Partikel-Auffang- und/oder Speichereinrichtungen, allerdings vorkommen, dass das für die Oxidation notwendige NO₂ nur durch den relativ langsamen Vorgang der Diffusion in die Partikel-Auffang- und/oder Speichereinrichtungen eindringen kann. Dies kann dann dazu führen, dass die Partikeloxidation in den z. B. Sacklöchern als Partikel-Auffang- und/oder Speichereinrichtungen auf Grund von lokalem NO₂-Mangel, bedingt durch die zu langsame Zuführung von Stickstoffdioxid, relativ schlecht ist. Daher ist es sinnvoll, einen kleinen Teil der NO₂-haltigen Strömung in Form eines Bypasses durch das z. B. Sackloch als Partikel-Auffang- und/oder Speichereinrichtung zu führen. Dabei ist jedoch darauf zu achten, dass die Strömungsgeschwindigkeit nicht zu hoch wird, um ein Ausblasen der aufgefangenen Partikel zu verhindern. Die Bypassströmung kann durch Perforation des Wandbereichs der Partikel-Auffang- und/oder Speichereinrichtung und/oder durch Verwendung eines porösen Materials realisiert werden. Insbesondere in Verbindung mit der Perforation der z. B. als Sackloch ausgebildeten Partikel-Auffang- und/oder Speichereinrichtung hat es sich als vorteilhaft erwiesen, nicht mehr als 30 % des Abgasstroms eines jeweiligen Strömungsbereiches durch die Partikel-Auffang- und/oder Speichereinrichtung aus dem Strömungsbereich abströmen zu lassen, um ein Aufwirbeln der dort abgeschiedenen Partikel zu verhindern.

Gemäß einer weiteren besonders bevorzugten Ausgestaltung der Erfindung ist vorgesehen, dass der Partikelabscheider wenigstens in Teilbereichen katalytisch aktiv, insbesondere mit einer katalytisch aktiven Beschichtung, beschichtet ist.

Ein besonders kostengünstiger Aufbau des Partikelabscheiders ergibt sich dann, wenn dieser als Plattenabscheider aus einer Mehrzahl von miteinander in übereinanderliegenden Lagen verbundenen Abscheiderplatten gebildet ist, die ein Plattenpaket ausbilden. Die unterschiedlichen Strömungsbereiche und/oder die Umlenkbereiche und/oder die Abtrennbereiche und/oder die Auffangbereiche und/oder die Speicherbereiche und/oder die Durchströmöffnungen können dabei ganz allgemein gesehen durch Materialumformungen und/oder Materialverformungen und/oder Materialverprägungen und/oder Materialausnehmungen an vorgegebenen Bereichen wenigstens eines Teils der Abscheiderplatten eines Plattenpaketes auf einfache Weise ausgebildet werden. Hierfür ist es von Vorteil, dass wenigstens ein Teil der Abscheiderplatten eines Plattenpaketes im Wesentlichen identisch ausgebildet ist, was jedoch nicht zwingend erforderlich ist. Besonders bevorzugt sind die einzelnen Abscheiderplatten dabei durch Folien und/oder Matten vorgegebener Wandstärke gebildet. Derartige Folien und/oder Matten lassen sich sehr einfach umformen, z. B. dergestalt, dass wenigstens eine der Folien gewellt ist, wobei der Begriff Wellung hier in einem weiten Sinne zu verstehen ist, und insbesondere auch ziehharmonikaförmig geknickte Formgebungen oder dergleichen umfassen soll. Mit derartigen gewellten z. B. Folien als Abscheiderplatten lässt sich in Kombination mit weiteren z. B. als Folie ausgebildeten Abscheiderplatten auf einfache Weise die entsprechend gewünschte Anzahl und Geometrie von Strömungskanälen des Partikelabscheiders ausbilden. Durch Einschnürungen bzw. Eindellungen, gleiche oder unterschiedliche Wellenamplituden (Höhenerstreckung) und/oder unterschiedliche oder gleiche Wellenfrequenzen (Anzahl der Wellen) lässt sich relativ einfach der freie Strömungsquerschnitt und damit die Strömungsgeschwindigkeit verändern oder eine Umlenkung erzielen oder können einzelne Bereiche komplett von der Strömung abgetrennt werden, um z. B. die gewünschten Totzonen zu schaffen. Besonders bevorzugt können dabei in Strömungsrichtung gesehen aufeinanderfolgende Einschnürungen das Wellprofil im Wechsel einmal von der Oberseite und einmal von der Unterseite her einschnüren. Weiter können die Einschnürungen bezüglich unterschiedlicher Plattenebenen auch versetzt zueinander angeordnet sein, z. B. dergestalt, dass die Einschnürungen bezüglich benachbarter Plattenebenen um den hälftigen Abstand zwischen den Einschnürungen gegeneinander versetzt sind.

Zudem können derartige durch z. B. dimensionsstabile Folien und/oder Matten gebildete Abscheiderplatten auf einfache Weise perforiert werden, wodurch ein Übergang in benachbarte Strömungskanäle möglich wird.

Als besonders vorteilhaft hat es sich erwiesen, z. B. Folien als Abscheiderplatten unterschiedlicher Amplitude und/oder Frequenz der Wellung oder Knickung abwechselnd anzuordnen, so dass Bereiche unterschiedlicher Strömungsquerschnitte, also unterschiedlicher Zelldichten und damit unterschiedlichen Strömungsgeschwindigkeiten, entstehen. Bilden die Folien z. B. parallele Strömungskanäle aus, sollte eine Glattlage als Zwischenlage vorgesehen werden, um ein Ineinanderrutschen der gewellten Folien zu verhindern.

Selbstverständlich ist es auch möglich, die Amplitude und/oder Frequenz der Wellung oder Knickung entlang einer Abscheiderplatte, z. B. einer Folie, zu verändern.

Die Abscheiderplatten können z. B. aus einem keramischen und/oder metallischen und/oder siliziumhaltigen und/oder siliziumcarbidhaltigen und/oder quarzhaltigen und/oder faserartigen Material hergestellt sein. Die Abscheiderplatten können dabei wenigstens in Teilbereichen eine Oberflächenstruktur mit definierter, das heißt vorgegebener Rauheit bzw. Rautiefe aufweisen, z. B. durch die nachfolgend noch näher beschriebene mechanische Bearbeitung. Der Übergang in die einzelnen Bereiche, insbesondere die Durchströmöffnung zu den benachbarten, bevorzugt unterschiedlichen Strömungsbereichen kann dabei durch Perforation und/oder Schlitzung der z. B. Folien und/oder Matten als Abscheiderplatten erfolgen.

Die Abscheidung der Partikel durch Diffusion und Trägheitskräfte gelingt nach dem beschriebenen erfindungsgemäßen Verfahren und mit dem beschriebenen Partikelabscheider auf einfache Weise. Die Oxidation der abgeschiedenen, kohlenstoffhaltigen Partikel kann, wie bereits oben beschrieben, durch Anhebung der Abgastemperatur und/oder mit Hilfe von, an einem Katalysator zur Oxidation von NO gebildetem, NO₂ erfolgen bzw. beschleunigt werden. Aufgrund der wechselnden bzw. zeitweise zu niedrigen Abgastemperaturen und der wechselnden NOₓ-Rohemissionen bei instationär betriebenen Brennkraftmaschinen steht allerdings oftmals nicht ausreichend NO₂ zur Verfügung, um den abgeschiedenen Ruß zu oxidieren. Das bedeutet, dass der Abscheider die Partikel so lange speichern muss, bis zu einem späteren Zeitpunkt ausreichend NO₂ zur Oxidation des abgeschiedenen Rußes vorhanden ist. Dies kann z. B. dadurch bewerkstelligt werden, dass die Haftung der Partikel an der Oberfläche des Partikelabscheiders bzw. der Abscheiderplatten verbessert wird. Hierfür sollten Oberflächen mit hohen Rauigkeiten verwendet werden. Bei Metallfolien bedeutet dies, dass sie beispielsweise durch mechanische Bearbeitung angeraut werden sollten. Dies kann z. B. durch Bürsten, Schleifen, Kratzen, Strahlen (z. B. Sandstrahlen), Coronabestrahlung, Prägen oder Nadeln geschehen. Auch eine chemische Behandlung, wie Ätzen, Galvanisieren oder Eloxieren ist denkbar. Außerdem kann die Legierung der z. B. Folie als Abscheiderplatte so angepasst werden, dass sich deren Oberflächenstruktur unter Wärmeeinwirkung und/oder durch Variation des pH-Wertes verändert. Ein Beispiel hierfür ist das Zufügen größerer Mengen von Aluminium. Dieses wandert bei hohen Temperaturen an die Oberfläche und bildet dort A-luminiumcluster.

Besonders vorteilhaft ist es, in Verbindung mit einer konkreten Ausführungsform, den wenigstens einen Partikelabscheider zusammen mit wenigstens einer Katalysatoreinrichtung in einem Schalldämpfer einer Abgasanlage anzuordnen.

Die Erfindung wird nachfolgend anhand einer Zeichnung erläutert.

Es zeigen:
- Fig. 1: eine schematische Draufsicht auf einen Teilbereich eines erfindungs- gemäßen Partikelabscheiders mit hier beispielhaft zwei Gruppen un- terschiedlicher Strömungsbereiche, und
- Fig. 2: schematisch einen Querschnitt durch einen erfindungsgemäßen Parti- kelabscheider der beispielhaft zwei übereinanderliegende Welllagen mit unterschiedlicher Amplitude, das heißt Wellenhöhe, aber gleicher Frequenz zeigt, wobei zwischen den beiden Welllagen eine Glattlage vorgesehen ist,
- Fig. 3: schematisch eine Darstellung gemäß Fig. 2, jedoch bezüglich einer anderen, Eindellungen zeigenden Schnittebene, und
- Fig. 4: schematisch ein perspektivischer Ausschnitt aus einem erfindungsge- mäßen Partikelabscheider.

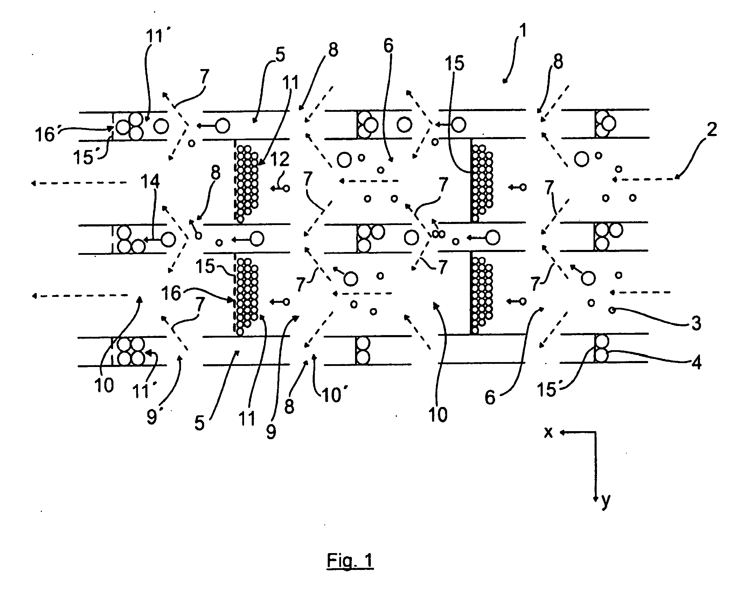

Die Fig. 1 zeigt schematisch einen Parallelschnitt durch wenigstens einen Teilbereich einer ersten Ausführungsform eines erfindungsgemäßen Partikelabscheiders 1 und damit quasi eine Draufsicht auf einen bestimmten Teilbereich des Partikelabscheiders 1, aus dem die Strömung des Abgasstroms 2 in Verbindung mit der Abscheidung von Feinstpartikeln 3 und Grobpartikeln 4 vom Prinzip her dargestellt ist.

Zur Ausbildung hinsichtlich der Strömungsverhältnisse, insbesondere hinsichtlich der Strömungsgeschwindigkeit und der Verweilzeit des Abgasstroms unterschiedlicher Abscheiderbereiche weist der Partikelabscheider 1 hier beispielhaft zwei Gruppen von unterschiedlichen Strömungsbereichen auf, die hier als Hochgeschwindigkeits-Strömungsbereiche 5 und Niedriggeschwindigkeits-Strömungsbereiche 6 innerhalb jeder der beiden Gruppen im Wesentlichen identisch ausgebildet sind.

Die Hochgeschwindigkeits-Strömungsbereiche 5 weisen gegenüber den Niedriggeschwindigkeits-Strömungsbereichen 6 einen deutlich kleineren, z. B. wenigstens um den Faktor 2 kleineren, freien Strömungsquerschnitt auf, so dass der jeweilige Teilabgasstrom in den Hochgeschwindigkeits-Strömungsbereichen eine höhere Strömungsgeschwindigkeit aufweist als in den Niedriggeschwindigkeits-Strömungsbereichen.

Sowohl die Hochgeschwindigkeits-Strömungsbereiche 5 als auch die Niedriggeschwindigkeits-Strömungsbereiche 6 sind hier in Form von in Strömungsrichtung x gesehen stirnseitig geschlossenen Strömungskammern ausgebildet, wobei in Strömungsrichtung x gesehen eine Mehrzahl derartiger Niedriggeschwindigkeits-Strömungsbereiche 6 und Hochgeschwindigkeits-Strömungsbereiche 5 unmittelbar hintereinander angeordnet sind. Die Strömungsrichtung x entspricht hier der Hauptströmungsrichtung des gesamten Abgasstroms durch den Partikelabscheider.

Wie dies der Fig. 1 weiter entnommen werden kann, sind die Hochgeschwindigkeits-Strömungsbereiche 5 und Niedriggeschwindigkeits-Strömungsbereiche 6 quer zur Strömungsrichtung (Querrichtung y) gesehen im Wechsel angeordnet und zudem in Strömungsrichtung x gesehen so zueinander versetzt, dass Teilabgasströme 7 aus einem in Strömungsrichtung x gesehen mittleren bis hinteren Strömungsbereichabschnitt 9 der Niedriggeschwindigkeits-Strömungsbereiche 6 über in Strömungsrichtung x gesehen seitliche Durchströmöffnungen 8 in einen in Strömungsrichtung x gesehen vorderen bis mittleren Strömungsbereichabschnitt 10' benachbarter Hochgeschwindigkeits-Strömungsbereiche 5 einströmen. Entsprechend umgekehrt strömen aufgrund dieser versetzten Anordnung der Hochgeschwindigkeits-Strömungsbereiche 5 zu den Niedriggeschwindigkeits-Strömungsbereichen 6 Teilabgasströme 7 aus einem mittleren bis hinteren Strömungsbereichabschnitt 9' der Hochgeschwindigkeits-Strömungsbereiche 5 über entsprechende Durchströmöffnungen 8 in einen vorderen bis mittleren Strömungsbereichabschnitt 10 der Niedriggeschwindigkeits-Strömungsbereiche 6 ein. Dementsprechend bilden die in Strömungsrichtung x gesehen hinteren Durchströmöffnungen 8 jeweils die Ausströmöffnungen für die Teilabgasströme 7 aus, während die in Strömungsrichtung x gesehen vorderen Durchströmöffnungen 8 des jeweiligen Strömungsbereiches 5, 6 die Einströmöffnungen ausbilden. Dabei können sich z. B. die vorderen Durchströmöffnungen des Niedriggeschwindigkeits-Strömungsbereiches 6 von den hinteren Durchströmöffnungen des Niedriggeschwindigkeits-Strömungsbereiches 6 in ihrer Form und/oder Größe unterscheiden, so dass sich bei der in der Fig. 1 gezeigten Anordnung dann dem entsprechend auch die hinteren und vorderen Durchströmöffnungen des Hochgeschwindigkeits-Strömungsbereiches 5 in ihrer Form und/oder Größe unterscheiden. Beispielsweise können die Durchströmöffnungen aber auch entlang der Strömungsrichtung (x) in Form und/oder Größe variieren, wodurch die Abscheidecharakteristik entlang der Strömung und damit zwischen dem Abscheiderein- und -austritt verändert werden kann.

Wie dies weiter der Fig. 1 entnommen werden kann, sind in Strömungsrichtung x gesehen vor bzw. nach den Durchströmöffnungen 8, das heißt im stirnseitigen Bereich der jeweils kammerartig ausgebildeten Strömungsbereiche 5, 6 sogenannte Sacklöcher 11 bzw. 11' als Partikelauffang- und Speichereinrichtung ausgebildet, die eine Art Totraumvolumen zur Verfügung stellen.
Die Funktionsweise des erfindungsgemäßen Partikelabscheiders 1 wird nun ebenfalls anhand der Fig. 1 näher erläutert. Aufgrund des relativ großen freien Strömungsquerschnittes in den Niedriggeschwindigkeits-Strömungsbereichen 6 werden die Teilabgasströme 7 so verzögert, dass der Abgasstrom im Niedriggeschwindigkeits-Strömungsbereich 6 eine sehr geringe Strömungsgeschwindigkeit aufweist. Die Auslegung der Niedriggeschwindigkeits-Strömungsbereiche 6 erfolgt dabei so, dass die Strömungsgeschwindigkeit des Abgasstroms so niedrig ist, dass Feinstpartikel 3 einer bestimmten, vorgegebenen Größenordnung und/oder Masse vom Abgasstrom weg in die Sacklöcher 11 der Niedriggeschwindigkeits-Strömungsbereiche 6 eindiffundieren können, wo sie zwischengespeichert werden. Diese Feinpartikel-Diffusion ist in der Fig. 1 mit dem Bezugszeichen 12 bezeichnet. Die gegenüber den Feinpartikeln 3 größeren und/oder schwereren Partikel, die hier vorliegend als Grobpartikel 4 bezeichnet werden, gelangen dagegen mit dem Abgasstrom bzw. hier beispielhaft mit den Teilabgasströmen 7 über die entsprechenden Durchströmöffnungen 8 in die Hochgeschwindigkeits-Strömungsbereiche 5, wo die Abgasströme wieder aufgrund des verringerten freien Strömungsquerschnittes beschleunigt werden. Die freien Strömungsquerschnitte in diesen Hochgeschwindigkeits-Strömungsbereichen 5 sind so ausgelegt, dass der Abgasstrom in diesen Hochgeschwindigkeits-Strömungsbereichen 5 auf eine solche Strömungsgeschwindigkeit beschleunigt wird, dass die durch das Ausströmen der Teilabgasströme 7 aus den seitlichen Durchströmöffnungen 8 der Hochgeschwindigkeits-Strömungsbereiche 5 bedingte plötzliche, scharfe Umlenkung des Abgasstroms in die angrenzenden Niedriggeschwindigkeits-Strömungsbereiche 6 hinein dazu führt, dass die Grobpartikel 4 aufgrund ihrer Massenträgheit nicht mehr in den Teilabgasströmen 7 verbleiben und, wie dies mit dem Bezugszeichen 14 dargestellt ist, quasi geradeaus weiterfliegen und von den Sacklöchern 11' der Hochgeschwindigkeits-Strömungsbereiche aufgefangen werden, wo die Grobpartikel 4 zwischengespeichert werden.

Wie dies auf der linken Bildhälfte der Fig. 1 schematisch mit den äußersten, linken Sacklöchern 11' der Hochgeschwindigkeits-Strömungsbereiche 5 bzw. den Sacklöchen 11 Niedriggeschwindigkeits-Strömungsbereiche 6 dargestellt ist, können die den Boden der Sacklöcher 11 bzw. 11' bildenden Prallwände 15 bzw. 15' perforiert ausgebildet sein, wobei die Gasdurchlässigkeit bevorzugt so mittels dieser Perforationen 16 bzw. 16' eingestellt ist, dass maximal 30 % des Abgasstroms in dem jeweiligen Strömungsbereich durch die Prallwand 15, 15' hindurch aus dem jeweiligen Strömungsbereich abströmen können. Alternativ dazu können die Prallwände 15, 15' oder aber auch weitere Bereiche der jeweiligen Strömungsbereiche 5, 6 aus einem gasdurchlässigen Material ausgebildet sein, und zwar wenigstens in Teilbereichen.

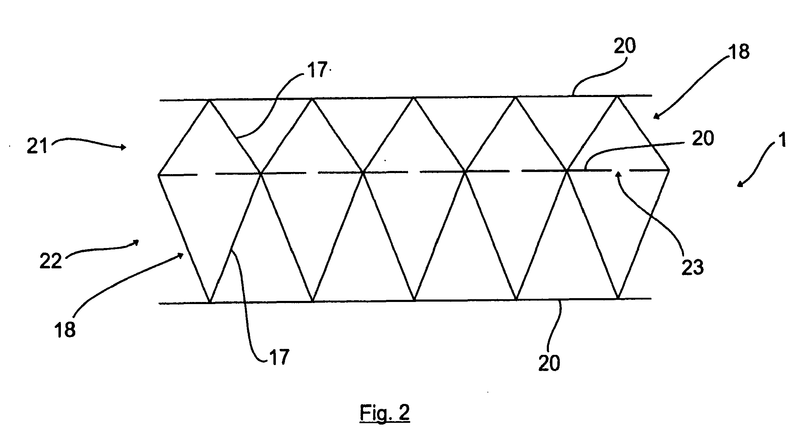

Wie dies insbesondere der Fig. 2 entnommen werden kann, ist der Partikelabscheider 1 bevorzugt als Plattenabscheider aus einer Mehrzahl von ein Plattenpaket ausbildenden übereinanderliegenden Abscheiderplatten ausgebildet, die in übereinanderliegenden Schichten miteinander verbunden werden. Als Darstellung ist ein Querschnitt durch ein Plattenpaket gewählt, wobei die Flussrichtung x sich in die Bildebene hinein ergibt. Die Plattenebenen können planar ausgeführt sein, aber auch gekrümmt, insbesondere wenn die Platten zu einem Plattenpaket aufgerollt werden.

Ein erster Teil dieser Abscheiderplatten ist hier durch dünne Metallfolien 17 ausgebildet, die längs zur Strömungsrichtung gesehen ein Wellprofil 18 aufweisen und damit eine Welllage ausbilden.

Wie dies der Fig. 2 weiter zu entnehmen ist, können neben den Metallfolien 17 als Abscheiderplatten, die ein Wellprofil 18 aufweisen, auch sogenannte Glattlagen als weitere Abscheiderplatten vorgesehen sein, die hier durch eine glatte Metallfolie 20 gebildet sind und die im Wechsel zu den ein Wellprofil 18 aufweisenden Metallfolien 17 angeordnet sind. Mittels dieser glatten Metallfolien 20 wird sichergestellt, dass die beiden, bezüglich des Wellprofils 18 unterschiedliche Welllagen 21 und 22 nicht ineinanderrutschen können. In der durch die glatte Metallfolie 20 gebildeten Glattlage können auch Durchströmöffnungen 23 ausgebildet sein. Wie dies aus der Fig. 2 weiter sehr gut ersichtlich ist, weisen die Welllagen 21, 22 hier zwar eine gleiche Wellenfrequenz, jedoch unterschiedliche Wellenamplituden, das heißt Wellenhöhen auf.

Um die Haftung der Partikel an der Oberfläche zu verbessern, können sämtliche Metallfolien 17, 20 mit einer hohen Oberflächenrauigkeit versehen und/oder mit einer katalytisch aktiven Beschichtung beschichtet sein.

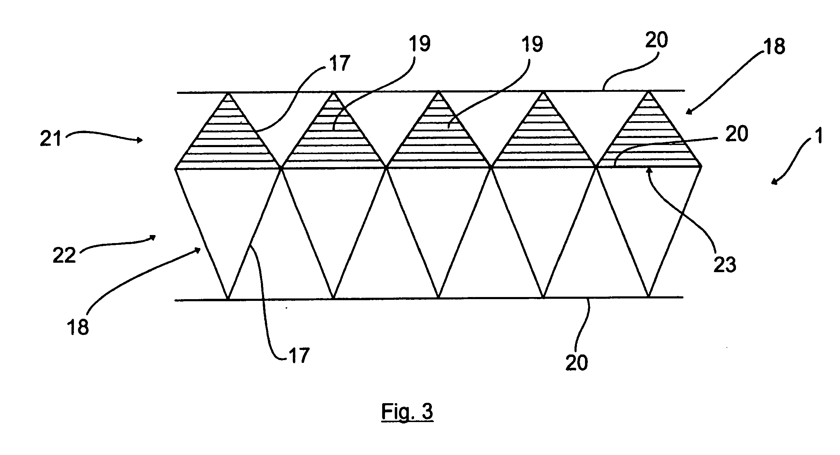

Die ein Wellprofil 18 aufweisenden Metallfolien 17 können zudem in Strömungsrichtung x gesehen mit einen hier beispielhaft gleichen Abstand voneinander aufweisenden Einschnürungen als Eindellungen versehen sein, mittels denen auf besonders einfache Weise die zuvor beschriebenen Totraumvolumen und damit Strömungsunterbrechungen ausgebildet werden können. In Fig. 3 ist dies an Hand einer anderen Schnittebene, die im Vergleich zur Fig. 2 weiter stromab liegt, dargestellt: Hier sind ein Teil der oberen Kanäle durch Eindellungen 19 verschlossen. Stromauf dieser Eindellungen 19 muss die Strömung über die in Verbindung mit der Fig. 2 beschriebenen Durchströmöffnungen 23 in benachbarte Kanäle ausweichen.

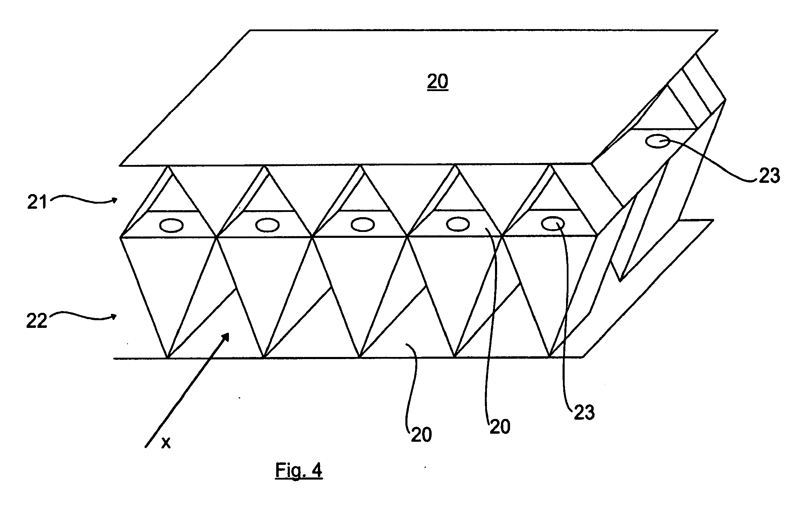

In Fig. 4 ist ein schematischer Ausschnitt aus einem erfindungsgemäßen Abscheider, bestehend aus zwei Welllagen 21, 22 mit zwischenliegenden Glattlagen 20 in perspektivischer Darstellung gezeigt. Über in den Glattlagen 20 angebrachte Durchströmöffnungen 23 wird der mit Partikeln beladene Gasstrom wechselseitig zwischen der Welllage 21 mit niedriger Amplitude, also hoher Strömungsgeschwindigkeit, und der Welllage 22 mit hoher Amplitude, also niedriger Strömungsgeschwindigkeit, geleitet. Dies gelingt durch wechselseitiges Verschließen der Kanäle, beispielsweise durch die eben beschriebene Eindellung der Metallfolien, die die Welllagen 21, 22 bilden.

## Patentansprüche

1. Partikelabscheider zur Abscheidung von Partikeln aus einem Abgasstrom einer Brennkraftmaschine, wobei der Partikelabscheider (1) von einem Abgasstrom (2, 7) wenigstens bereichsweise durchströmbar ist, wobei im Partikelabscheider (1) hinsichtlich der Strömungsverhältnisse unterschiedliche Strömungsbereiche (5, 6) dergestalt ausgebildet sind, dass in den unterschiedlichen Strömungsbereichen (5, 6) im Wesentlichen Partikel (3, 4) unterschiedlicher, definierter Größenordnung und/oder unterschiedlicher, definierter Masse aus dem Abgasstrom (2, 7) abscheidbar sind, **dadurch gekennzeichnet, dass** die unterschiedlichen, räumlich voneinander getrennte Strömungsbereiche (5, 6) ausgebildet sind zur im Wesentlichen getrennten Abscheidung von definierten Feinstpartikeln (3) durch im Wesentlichen Diffusion und demgegenüber definiert größeren und/oder schwereren Grobpartikeln (4) aufgrund deren Massenträgheit.

2. Partikelabscheider nach Anspruch 1 , **dadurch gekennzeichnet, dass** sich die unterschiedlichen Strömungsbereiche (5, 6) hinsichtlich der Strömungsgeschwindigkeit und/oder der Verweilzeit des Abgasstromes (2, 7) in den Strömungsbereichen (5, 6) unterscheiden.

3. Partikelabscheider nach einem der Ansprüche 1 oder 2, **dadurch gekennzeichnet, dass** der Partikelabscheider (1) zur Ausbildung der unterschiedlichen Strömungsbereiche (5, 6) Mittel aufweist, mit denen der Abgasstrom (2, 7) im Partikelabscheider beschleunigt und/oder verzögert wird.

4. Partikelabscheider nach einem der Ansprüche 1 bis 3, **dadurch gekennzeichnet, dass** die unterschiedlichen Strömungsbereiche (5, 6) durch unterschiedlich große freie Strömungsquerschnitte gebildet sind.

5. Partikelabscheider nach einem der Ansprüche 1 bis 4, **dadurch gekennzeichnet, dass** die unterschiedlichen Strömungsbereiche (5, 6) in Strömungsrichtung des Abgasstromes (2) gesehen hintereinander und/oder nebeneinander und/oder übereinander angeordnet sind.

6. Partikelabscheider nach einem der Ansprüche 1 bis 5, **dadurch gekennzeichnet, dass** der Partikelabscheider (1) Mittel aufweist, mittels denen der Abgasstrom (2, 7) im Partikelabscheider (1) wiederholt umgelenkt und/oder in Teilabgasströme (7) aufgeteilt wird.

7. Partikelabscheider nach Anspruch 5 oder 6, **dadurch gekennzeichnet, dass** der Partikelabscheider (1) eine Mehrzahl von Strömungskanälen aufweist, wobei wenigstens ein Teil der Strömungskanäle insbesondere bezüglich des Öffnungsquerschnitts quer zur Strömungsrichtung ausgerichtete und/oder in einem seitlichen Strömungskanalwandbereich ausgebildete Durchströmöffnungen (8) aufweist, über die wenigstens ein Teil der Durchströmkanäle strömungsverbunden ist.

8. Partikelabscheider nach einem der Ansprüche 1 bis 7, **dadurch gekennzeichnet, dass** die unterschiedlichen Strömungsbereiche (5, 6) so angeordnet sind, dass wenigstens ein Teilabgasstrom (7) des einen ersten Strömungsbereich (5) mit definierter Strömungsgeschwindigkeit und/oder definierter Verweilzeit durchströmenden Abgasstroms in einem zweiten, hinsichtlich Strömungsgeschwindigkeit und/oder Verweilzeit des Abgasstromes zum ersten Strömungsbereich unterschiedlichen Strömungsbereich (6) einströmt.

9. Partikelabscheider nach Anspruch 8, **dadurch gekennzeichnet, dass** mehrere, vorzugsweise zwei Gruppen von unterschiedlichen Strömungsbereichen (5, 6) ausgebildet sind, wobei die Strömungsbereiche (5, 6) jeder Gruppe im Wesentlichen identisch ausgebildet sind.

10. Partikelabscheider nach Anspruch 8 oder 9, **dadurch gekennzeichnet, dass** die benachbarten, bevorzugt unterschiedlichen Strömungsbereiche (5, 6) in Strömungsrichtung gesehen wenigstens abschnittsweise so gegeneinander versetzt angeordnet sind, dass eine Ausströmöffnung eines ersten Strömungsbereiches (5) eine Einströmöffnung eines zweiten, vorzugsweise zum ersten Strömungsbereich (5) unterschiedlichen Strömungsbereiches (6) ausbildet.

11. Partikelabscheider nach einem der Ansprüche 1 bis 10, **dadurch gekennzeichnet, dass** jedem der unterschiedlichen Strömungsbereiche (5, 6) eine Partikel-Auffang- und/oder Speichervorrichtung (11, 11') zugeordnet ist.

12. Partikelabscheider nach Anspruch 11, **dadurch gekennzeichnet, dass** die Partikel-Auffang- und/oder Partikel-Speichervorrichtung (11, 11') durch ein Speichervolumen bzw. sacklochartiges Totraumvolumen gebildet ist.

13. Partikelabscheider nach Anspruch 12, **dadurch gekennzeichnet, dass** die Partikel-Auffang- und/oder Partikel-Speichervorrichtung (11, 11') durch einen sacklochartigen Strömungskanalabschnitt mit im Wesentlichen senkrecht zum Abgasstrom ausgerichteter Prallbodenwand (15, 15') gebildet ist.

14. Partikelabscheider nach einem der Ansprüche 11 bis 13, **dadurch gekennzeichnet, dass** die Partikel-Auffang- und/oder Partikel-Speichervorrichtung (11, 11') in Strömungsrichtung des Abgasstromes gesehen vor einer Einströmöffnung des jeweiligen Strömungsbereichs und/oder nach einer Ausströmöffnung des jeweiligen Strömungsbereiches (5, 6) angeordnet ist.

15. Partikelabscheider nach einem der Ansprüche 11 bis 14, **dadurch gekennzeichnet, dass** die Partikel-Auffang- und/oder Partikel-Speichervorrichtung (11, 11') in vorgegebenen Bereichen gasdurchlässig ausgebildet ist, insbesondere vorgegebene Wandbereiche der Partikel-Auffang- und/oder Speichervorrichtung (11, 11') perforiert und/oder aus einem gasdurchlässigen Material hergestellt sind.

16. Partikelabscheider nach Anspruch 15, **dadurch gekennzeichnet, dass** die Gasdurchlässigkeit so eingestellt ist, dass eine vorgegebene Menge, bevorzugt maximal 30 %, des Abgasstromes eines jeweiligen Strömungsbereiches (5, 6), durch die Partikel-Auffang- und/oder Speichereinrichtung (11, 11') aus dem Strömungsbereich abströmen.

17. Partikelabscheider nach einem der Ansprüche 1 bis 16, **dadurch gekennzeichnet, dass** der Partikelabscheider (1) wenigstens in Teilbereichen katalytisch aktiv ist, insbesondere mit einer katalytischen Beschichtung beschichtet ist.

18. Partikelabscheider nach einem der Ansprüche 1 bis 17, **dadurch gekennzeichnet, dass** der Partikelabscheider (1) aus einer Mehrzahl von miteinander in übereinanderliegenden Lagen verbundenen Abscheiderplatten (17, 20) gebildet ist, die ein Plattenpaket ausbilden.

19. Partikelabscheider nach Anspruch 18, **dadurch gekennzeichnet, dass** die einzelnen Abscheiderplatten (17, 20) durch Folien und/oder Matten vorgegebener Wandstärke gebildet sind.

20. Partikelabscheider nach Anspruch 18 oder 19, **dadurch gekennzeichnet, dass** die Abscheiderplatten (17, 20) aus einem metallischen und/oder keramischen und/oder siliziumhaltigen und/oder siliziumkarbidhaltigen und/oder quarzhaltigen und/oder faserartigen Material hergestellt sind.

21. Partikelabscheider nach einem der Ansprüche 18 bis 20, **dadurch gekennzeichnet, dass** die Abscheiderplatten (17, 20) wenigstens in Teilbereichen eine Oberflächenstruktur mit Rauhtiefe oder Rauheit vorgegebener Größenordnung aufweisen.

22. Partikelabscheider nach einem der Ansprüche 1 bis 21, **dadurch gekennzeichnet, dass** der Partikelabscheider (1) im Querschnitt betrachtet eine wabenförmige Struktur aufweist, wobei die einzelnen Waben jeweils einen Strömungsquerschnitt eines in Strömungsrichtung gesehen bestimmten Abschnittes eines Strömungskanals darstellen.

23. Partikelabscheider nach einem der Ansprüche 18 bis 22, **dadurch gekennzeichnet, dass** die unterschiedlichen Strömungsbereiche (5, 6) und/oder die Umlenkbereiche und/oder die Abtrennbereiche und/oder die Auffangbereiche und/oder die Speicherbereiche und/oder die Durchströmöffnungen durch Materialumformungen und/oder Materialverformungen und/oder Materialverprägungen und/oder Materialausnehmungen an vorgegebenen Bereichen wenigstens eines Teils der Abscheiderplatten (17, 20) eines Plattenpaketes ausgebildet sind.

24. Partikelabscheider nach einem der Ansprüche 18 bis 23, **dadurch gekennzeichnet, dass** wenigstens ein Teil der Abscheiderplatten (17, 20) eines Plattenpaketes im Wesentlichen identisch ausgebildet ist.

25. Partikelabscheider nach einem der Ansprüche 18 bis 24, **dadurch gekennzeichnet, dass** das Plattenpaket wenigstens teilweise aus im Wesentlichen quer und/oder längs zur Strömungsrichtung ein wellenartiges Profil (18) aufweisenden und eine Welllage ausbildenden Abscheiderplatten (17) aufgebaut ist.

26. Partikelabscheider nach Anspruch 25, **dadurch gekennzeichnet, dass** die eine Welllage ausbildenden Abscheiderplatten (17) in Strömungsrichtung voneinander beabstandete, vorzugsweise einen gleichen Abstand voneinander aufweisende, und im Wesentlichen quer zur Strömungsrichtung verlaufende, das Wellenprofil (18) und damit den Längsverlauf der durch das Wellprofil (18) ausgebildeten Strömungskanäle unterbrechende Einschnürungen (19) aufweist.

27. Partikelabscheider nach Anspruch 25 oder 26, **dadurch gekennzeichnet, dass** die eine Welllage ausbildende Abscheiderplatte (17) im seitlichen Bereich vor bzw. nach jeder Einschnürung (19) wenigstens eine Durchströmöffnung (8) für den Abgasstrom aufweist.

28. Partikelabscheider nach Anspruch 26 oder 27, **dadurch gekennzeichnet, dass** in Strömungsrichtung gesehen aufeinanderfolgende Einschnürungen (19) das Wellprofil (18) im Wechsel einmal von einer Oberseite und einmal von einer Unterseite her einschnüren.

29. Partikelabscheider nach einem der Ansprüche 25 bis 28, **dadurch gekennzeichnet, dass** die unterschiedlichen Strömungsbereiche (5, 6) durch unterschiedliche Amplituden und/oder Frequenzen des Wellprofils (18) wenigstens einer eine Welllage ausbildenden Abscheiderplatte (17) ausgebildet sind.

30. Partikelabscheider nach einem der Ansprüche 25 bis 29, **dadurch gekennzeichnet, dass** die unterschiedlichen Strömungsbereiche (5, 6) durch unterschiedliche Amplituden und/oder Frequenzen des Wellprofils (18) unterschiedlicher eine Wellage ausbildender Abscheiderplatten (17) ausgebildet sind.

31. Partikelabscheider nach einem der Ansprüche 25 bis 30, **dadurch gekennzeichnet, dass** das Plattenpaket ebene, eine Glattlage ausbildende Abscheiderplatten (20) aufweist, die vorzugsweise im Wechsel mit ein Wellprofil (18) aufweisenden und eine Welllage ausbildenden Abscheiderplatten (17) angeordnet sind.

32. Partikelabscheider nach einem der Ansprüche 7 bis 31, **dadurch gekennzeichnet, dass** die Durchströmöffnungen (8), insbesondere entlang der Strömungsrichtung (x), wenigstens zum Teil hinsichtlich ihrer Form und/oder Größe unterschiedlich ausgebildet sind.

33. Partikelabscheider nach einem der Ansprüche 1 bis 32, **dadurch gekennzeichnet, dass** wenigstens ein Partikelabscheider zusammen mit wenigstens einer Katalysatoreinrichtung in einem Schalldämpfer einer Abgasanlage angeordnet ist.

34. Verfahren zur Abscheidung von Partikeln aus einem Abgasstrom einer Brennkraftmaschine, bei dem ein Abgasstrom einen Partikelabscheider, insbesondere einen Partikelabscheider nach einem der Ansprüche 1 bis 34, wenigstens bereichsweise durchströmt, wobei im Partikelabscheider (1) hinsichtlich der Strömungsverhältnisse unterschiedliche Strömungsbereiche (5, 6) dergestalt ausgebildet sind, dass in den unterschiedlichen Strömungsbereichen (5, 6) im Wesentlichen Partikel (3, 4) unterschiedlicher, definierter Größenordnung und/oder unterschiedlicher, definierter Masse abgeschieden werden, **dadurch gekennzeichnet, dass** die Strömungsgeschwindigkeit und/oder die Verweilzeit eines Abgasstroms oder eines Teilstromes des Abgasstromes in unterschiedlichen Strömungsbereichen so vorgegeben wird, dass in einer ersten Gruppe von Strömungsbereichen (6) im Wesentlichen Feinpartikel (3) definierter Größenordnung, durch Diffusion, und in wenigstens einer weiteren Gruppe von Strömungsbereichen (5) im Wesentlichen gegenüber den Feinpartikeln (3) größere und/oder schwerere Grobpartikel (4) aufgrund deren Massenträgheit abgeschieden werden.

35. Verfahren nach Anspruch 34, **dadurch gekennzeichnet, dass** ein, in einem Hochgeschwindigkeits-Strömungsbereich (5), eine vorgegebene hohe Strömungsgeschwindigkeit aufweisender Abgasstrom so umgelenkt wird, dass Grobpartikel (4) bestimmter Größe und/oder Schwere aufgrund deren Massenträgheit dem Abgasstrom nicht mehr folgen können und abgeschieden werden, insbesondere in einer Partikel-Auffang- und/oder Speichereinrichtung (11) aufgefangen werden, und dass ein Abgasstrom in einem demgegenüber eine niedrigere Strömungsgeschwindigkeit aufweisenden Niedriggeschwindigkeits-Strömungsbereich (6) so verzögert wird, dass gegenüber den Grobpartikeln (4) kleinere und/oder leichtere Feinpartikel (3) durch Diffusion aus dem Abgasstrom abgeschieden werden.

36. Verfahren nach einem der Ansprüche 34 oder 35, **dadurch gekennzeichnet, dass** die im Partikelabscheider (1) abgeschiedenen, kohlenstoffhaltigen Partikel mit Hilfe von, an einem Katalysator zur Oxidation von NO gebildetem, NO₂ oxidiert werden.

37. Verfahren nach einem der Ansprüche 34 bis 36, **dadurch gekennzeichnet, dass** die im Partikelabscheider (1) abgeschiedenen, kohlenstoffhaltigen Partikel durch Anhebung der Abgastemperatur oxidiert werden.

## Claims

1. A particle separator for separating particles out of an exhaust stream of an internal combustion engine, it being possible for an exhaust stream (2, 7) to flow, at least in regions, through the particle separator (1), with flow regions (5, 6) which differ with regard to the flow conditions being formed in the particle separator (1), such that substantially particles (3, 4) of different, defined size and/or different, defined mass can be separated out of the exhaust stream (2, 7) in the different flow regions (5, 6), **characterised in that** the different flow regions (5, 6), preferably ones which are spatially separated from one another, are formed in the particle separator (1) for substantially separate separation of defined ultrafine particles (3) by substantially diffusion and in contrast defined larger and/or heavier coarse particles (4) owing to their mass moment of inertia.

2. A particle separator according to Claim 1, **characterised in that** the different flow regions (5, 6) differ with regard to the flow rate and/or the residence time of the exhaust stream (2, 7) in the flow regions (5, 6).

3. A particle separator according to one of Claims 1 or 2, **characterised in that** the particle separator (1), for forming the different flow regions (5, 6), has means by means of which the exhaust stream (2, 7) in the particle separator is accelerated and/or decelerated.

4. A particle separator according to one of Claims 1 to 3, **characterised in that** the different flow regions (5, 6) are formed by different sizes of free flow cross-sections.

5. A particle separator according to one of Claims 1 to 4, **characterised in that** the different flow regions (5, 6), viewed in the direction of flow of the exhaust stream (2), are arranged behind one another and/or next to one another and/or one above another.

6. A particle separator according to one of Claims 1 to 5, **characterised in that** the particle separator (1) has means by means of which the exhaust stream (2, 7) in the particle separator (1) is repeatedly deflected and/or divided up into partial exhaust streams (7).

7. A particle separator according to Claim 5 or 6, **characterised in that** the particle separator (1) has a plurality of flow channels, with at least part of the flow channels having, in particular with respect to the opening cross-section, throughflow openings (8) oriented transversely to the direction of flow and/or formed in a lateral flow-channel wall region, via which openings at least a portion of the throughflow channels is connected for flow purposes.

8. A particle separator according to one of Claims 1 to 7, **characterised in that** the different flow regions (5, 6) are arranged such that at least a partial exhaust stream (7) of the exhaust stream which flows through a first flow region (5) with a defined flow rate and/or defined residence time flows into a second flow region (6) which is different from the first flow region with regard to the flow rate and/or residence time of the exhaust stream.

9. A particle separator according to Claim 8, **characterised in that** a plurality of, preferably two, groups of different flow regions (5, 6) are formed, the flow regions (5, 6) of each group being formed substantially identically.

10. A particle separator according to Claim 8 or 9, **characterised in that** the adjacent, preferably different flow regions (5, 6), viewed in the direction of flow, are arranged offset relative to one another, at least in sections, such that an outlet opening of a first flow region (5) forms an inlet opening of a second flow region (6), preferably different from the first flow region (5).

11. A particle separator according to one of Claims 1 to 10, **characterised in that** each of the different flow regions (5, 6) is assigned a particle collection and/or storage device (11, 11').

12. A particle separator according to Claim 11, **characterised in that** the particle collection and/or particle storage device (11, 11') is formed by a storage volume or blind-hole-like dead volume.

13. A particle separator according to Claim 12, **characterised in that** the particle collection and/or particle storage device (11, 11') is formed by a blind-hole-like flow-channel section with a baffle-plate wall (15, 15') oriented substantially at right-angles to the exhaust stream.

14. A particle separator according to one of Claims 11 to 13, **characterised in that** the particle collection and/or particle storage device (11, 11'), viewed in the direction of flow of the exhaust stream, is arranged before an inlet opening of the respective flow region and/or after an outlet opening of the respective flow region (5, 6).

15. A particle separator according to one of Claims 11 to 14, **characterised in that** the particle collection and/or particle storage device (11, 11') in predetermined regions is made to be gas-permeable, in particular predetermined wall regions of the particle collection and/or storage device (11, 11') are perforated and/or made from a gas-permeable material.

16. A particle separator according to Claim 15, **characterised in that** the gas permeability is set such that a predetermined amount, preferably at most 30%, of the exhaust stream of a respective flow region (5, 6) flows away through the particle collection and/or storage means (11, 11') out of the flow region.

17. A particle separator according to one of Claims 1 to 16, **characterised in that** the particle separator (1), at least in partial regions, is catalytically active, in particular is coated with a catalytic coating.

18. A particle separator according to one of Claims 1 to 17, **characterised in that** the particle separator (1) is formed from a plurality of separator plates (17, 20) which are joined together in layers lying one above another, which form a plate stack.

19. A particle separator according to Claim 18, **characterised in that** the individual separator plates (17, 20) are formed by sheets and/or mats of predetermined wall thickness.

20. A particle separator according to Claim 18 or 19, **characterised in that** the separator plates (17, 20) are made from a metallic and/or ceramic and/or silicon-containing and/or silicon carbide-containing and/or quartz-containing and/or fibre-like material.

21. A particle separator according to one of Claims 18 to 20, **characterised in that** the separator plates (17, 20), at least in partial regions, have a surface structure with a surface roughness or roughness of predetermined size.

22. A particle separator according to one of Claims 1 to 21, **characterised in that** the particle separator (1), viewed in cross-section, has a honeycomb structure, the individual honeycombs each representing a flow cross-section of a certain section, viewed in the direction of flow, of a flow channel.

23. A particle separator according to one of Claims 18 to 22, **characterised in that** the different flow regions (5, 6) and/or the deflection regions and/or the separation regions and/or the collection regions and/or the storage regions and/or the throughflow openings are formed by material shapings and/or material deformations and/or material embossings and/or material recesses on predetermined regions at least of part of the separator plates (17, 20) of a plate stack.

24. A particle separator according to one of Claims 18 to 23, **characterised in that** at least a portion of the separator plates (17, 20) of a plate stack is formed substantially identically.

25. A particle separator according to one of Claims 18 to 24, **characterised in that** the plate stack is constructed at least partially of separator plates (17) having a wavelike profile (18) and forming a corrugated layer substantially transversely and/or lengthwise to the direction of flow.

26. A particle separator according to Claim 25, **characterised in that** the separator plates (17) forming a corrugated layer in the direction of flow have spaced-apart constrictions (19), preferably being at an equal distance from each other, and extending substantially transversely to the direction of flow, which interrupt the wave profile (18) and hence the longitudinal extent of the flow channels formed by the corrugated profile (18).

27. A particle separator according to Claim 25 or 26, **characterised in that** the separator plate (17) forming a corrugated layer has at least one throughflow opening (8) for the exhaust stream in the lateral region before and/or after each constriction (19).

28. A particle separator according to Claim 26 or 27, **characterised in that** constrictions (19) which succeed one another, viewed in the direction of flow, constrict the corrugated profile (18) alternately once from an upper side and once from a lower side.

29. A particle separator according to one of Claims 25 to 28, **characterised in that** the different flow regions (5, 6) are formed by different amplitudes and/or frequencies of the corrugated profile (18) at least of one separator plate (17) forming a corrugated layer.

30. A particle separator according to one of Claims 25 to 29, **characterised in that** the different flow regions (5, 6) are formed by different amplitudes and/or frequencies of the corrugated profile (18) of different separator plates (17) forming a corrugated layer.

31. A particle separator according to one of Claims 25 to 30, **characterised in that** the plate stack has flat separator plates (20) which form a smooth layer, which plates are preferably arranged alternately with separator plates (17) having a corrugated profile (18) and forming a corrugated layer.

32. A particle separator according to one of Claims 7 to 31, **characterised in that** the throughflow openings (8), in particular along the direction of flow (x), are formed at least in part differently with regard to their shape and/or size.

33. A particle separator according to one of Claims 1 to 32, **characterised in that** at least one particle separator together with at least one catalyst means is arranged in a silencer of an exhaust system.

34. A method for separating particles out of an exhaust stream of an internal combustion engine, in which an exhaust stream flows, at least in regions, through a particle separator, in particular a particle separator according to one of Claims 1 to 34 [sic], with flow regions (5, 6) which differ with regard to the flow conditions being formed in the particle separator (1) such that substantially particles (3, 4) of different, defined size and/or different, defined mass are separated off in the different flow regions (5, 6), **characterised in that** the flow rate and/or the residence time of an exhaust stream or of a partial stream of the exhaust stream in different flow regions is preset such that in a first group of flow regions (6) substantially fine particles (3) of defined size are separated off, by diffusion, and in at least one further group of flow regions (5) substantially larger and/or heavier coarse particles (4) compared with the fine particles (3) are separated off owing to their mass moment of inertia.

35. A method according to Claim 34, **characterised in that** an exhaust stream, in a high-speed flow region (5), which has a predetermined high flow rate is deflected such that coarse particles (4) of a given size and/or weight owing to their mass moment of inertia can no longer follow the exhaust stream and are separated off, in particular are collected in a particle collection and/or storage means (11), and **in that** an exhaust stream in a low-speed flow region (6) having an in contrast lower flow rate is decelerated such that smaller and/or lighter fine particles (3) compared with the coarse particles (4) are separated out of the exhaust stream by diffusion.

36. A method according to one of Claims 34 or 35, **characterised in that** the carbon-containing particles separated off in the particle separator (1) are oxidised with the aid of NO₂ formed at a catalyst for the oxidation of NO.

37. A method according to one of Claims 34 to 36, **characterised in that** the carbon-containing particles separated off in the particle separator (1) are oxidised by raising the exhaust temperature.

## Revendications

1. Séparateur de particules pour séparer les particules d'une veine de gaz d'échappement d'un moteur à combustion,
- le séparateur de particules (1) étant traversé au moins par zones par une veine de gaz d'échappement (2, 7),
- différentes zones d'écoulement avec des conditions d'écoulement différentes sont réalisées dans le séparateur de particules (1), de façon à séparer dans les différentes zones d'écoulement (5, 6), principalement des particules (3, 4) de taille définie, différente et/ou de masse définie différente de la veine des gaz d'échappement (2, 7),
**caractérisé en ce que**
les différentes zones d'écoulement (5, 6) séparées les unes des autres dans l'espace sont réalisées pour séparer principalement de façon distincte des particules très fines, définies (3), essentiellement par diffusion et en revanche, des particules grandes, définies et/ou des particules grossières, lourdes (4), par leur inertie.

2. Séparateur de particules selon la revendication 1,
**caractérisé en ce que**
les différentes zones d'écoulement (5, 6) se distingues quant à la vitesse d'écoulement et/ou autant de séjours de la veine de gaz d'échappement (2, 7), dans les différentes zones d'écoulement (5, 6).

3. Séparateur de particules selon la revendication 1 ou 2,
**caractérisé en ce que**
pour réaliser les différentes zones d'écoulement (5, 6), le séparateur de particules (1) comporte des moyens pour accélérer et/ou retarder la veine de gaz d'échappement (2, 7) dans le séparateur de particules.

4. Séparateur de particules selon l'une des revendications 1 à 3,
**caractérisé en ce que**
les différentes zones d'écoulement (5, 6) sont formées par des sections de passage libre de dimensions différentes.

5. Séparateur de particules selon l'une des revendications 1 à 4,
**caractérisé en ce que**
les zones d'écoulement (5, 6) différentes, sont les unes à la suite des autres dans la direction de passage de la veine des gaz d'échappement (2) et/ou sont juxtaposées et/ou sont superposées.

6. Séparateur de particules selon l'une des revendications 1 à 5,
**caractérisé en ce que**
le séparateur de particules (1) comporte des moyens pour dévier de façon répétée la veine des gaz d'échappement (2, 7) dans le séparateur de particules (1) et/ou la diviser en veines partielles de gaz d'échappement (7).

7. Séparateur de particules selon la revendication 5 ou 6,
**caractérisé en ce que**
le séparateur de particules (1) comporte un ensemble de canaux d'écoulement,
- au moins une partie des canaux d'écoulement comportent des orifices de passage (8) dont notamment la section de passage est alignée transversalement à la direction d'écoulement et/ou qui sont réalisés dans une zone de paroi de canal d'écoulement, latérale, par lesquels au moins une partie des canaux d'écoulement communiquent.

8. Séparateur de particules selon l'une des revendications 1 à 7,
**caractérisé en ce que**
les zones d'écoulement (5, 6) différentes sont installées pour qu'au moins une veine partielle de gaz d'échappement (7) de la première zone d'écoulement (5) arrive à une vitesse d'écoulement définie et/ou séjourne pendant un temps de séjour défini dans une seconde zone (6) différente de la première zone d'écoulement par la vitesse d'écoulement et/ou le temps de séjour de la veine des gaz d'échappement.

9. Séparateur de particules selon la revendication 8,
**caractérisé en ce que**
plusieurs zones d'écoulement (5, 6) différentes, de préférence deux groupes, sont réalisées et les zones d'écoulement (5, 6) de chaque groupe sont pratiquement identiques.

10. Séparateur de particules selon la revendication 8 ou 9,
**caractérisé en ce que**
les zones d'écoulement (5, 6) voisines, de préférence différentes, sont décalées l'une par rapport à l'autre au moins par segments lorsqu'on regarde dans la direction d'écoulement,
un orifice de sortie d'une première zone d'écoulement (5) formant un orifice d'entrée d'une seconde zone d'écoulement (6), de préférence différente de la première zone d'écoulement (5).

11. Séparateur de particules selon l'une des revendications 1 à 10,
**caractérisé en ce qu'**
un dispositif récepteur de particules et/ou de stockage (11, 11') est associé à chacune des différentes zones d'écoulement (5, 6).

12. Séparateur de particules selon la revendication 11,
**caractérisé en ce que**
le dispositif de réception de particules et/ou de stockage de particules (11, 11') est réalisé par un volume de stockage ou un volume mort en forme de trou borgne.

13. Séparateur de particules selon la revendication 12,
**caractérisé en ce que**
le dispositif de réception de particules et/ou de stockage de particules (11, 11'), est réalisé par un segment de canal d'écoulement en forme de trou borgne avec une paroi brise-jet (15, 15') pratiquement perpendiculaire à la veine des gaz d'échappement.

14. Séparateur de particules selon l'une des revendications 11 à 13,
**caractérisé en ce que**
le dispositif de réception de particules et/ou de stockage de particules (11, 11'), est en amont d'un orifice d'entrée de la zone d'écoulement respective et/ou après un orifice de sortie de la zone d'écoulement respective (5, 6) dans le sens de passage de la veine des gaz d'échappement.

15. Séparateur de particules selon l'une des revendications 11 à 14,
**caractérisé en ce que**
le dispositif de réception de particules et/ou de stockage de particules (11, 11'), est perméable aux gaz dans des zones prédéfinies, notamment des zones de paroi prédéfinies du dispositif de réception de particules et/ ou de stockage de particules (11, 11') en étant perforé et/ ou réalisé en un matériau perméable aux gaz.

16. Séparateur de particules selon la revendication 15,
**caractérisé en ce que**
la perméabilité aux gaz est réglée pour qu'une quantité prédéfinie de préférence au maximum 30 % de la veine des gaz d'échappement d'une zone d'écoulement respective (5, 6), sorte de la zone d'écoulement à travers le dispositif de réception de particules et/ou de stockage de particules (11, 11').

17. Séparateur de particules selon l'une des revendications 1 à 16,
**caractérisé en ce qu'**
au moins dans des zones partielles, le séparateur de particules (1) a une activité catalytique et il est notamment muni d'un revêtement catalyseur.

18. Séparateur de particules selon l'une des revendications 1 à 17,
**caractérisé en ce que**
le séparateur de particules (1) est formé d'un ensemble de plaques de séparateur (17, 20) reliées pour former des couches superposées constituant un paquet de plaques.

19. Séparateur de particules selon la revendication 18,
**caractérisé en ce que**
les différentes plaques de séparateur (17, 20) sont réalisées par des films et/ou des nappes d'épaisseur de paroi prédéfinie.

20. Séparateur de particules selon la revendication 18 ou 19,
**caractérisé en ce que**
les plaques de séparateur (17, 20) sont réalisées en un matériau métallique et/ou céramique et/ou contenant du silicium et/ou contenant du carbure de silicium et/ou contenant du quartz et/ou contenant des fibres.

21. Séparateur de particules selon l'une des revendications 18 à 20,
**caractérisé en ce que**
les plaques de séparateur (17, 20) ont au moins dans des zones partielles, une structure de surface avec une profondeur de rugosité ou une rugosité correspondant à ordre de grandeur prédéfini.

22. Séparateur de particules selon l'une des revendications 1 à 21,
**caractérisé en ce que**
le séparateur de particules (1) présente une structure en nid d'abeilles lorsqu'il est vue en coupe et les différents alvéoles ont chacun une section de passage d'un segment prédéfini vue dans la direction de passage d'un canal d'écoulement.

23. Séparateur de particules selon l'une des revendications 18 à 22,
**caractérisé en ce que**
les différentes zones d'écoulement (5, 6) et/ou les zones de déviation et/ou les zones de séparation et/ou les zones de collecte et/ou les zones de stockage et/ou les orifices de passage, sont réalisés par des transformations de matière et/ou des déformations de matière et/ou des impressions de matière et/ou des découpes de matière dans des zones prédéfinies d'au moins une partie des plaques de séparateur (17, 20) d'un paquet de plaques.

24. Séparateur de particules selon l'une des revendications 18 à 23,
**caractérisé en ce qu'**
au moins une partie des plaques de séparateur (17, 20) d'un paquet de plaques, est une réalisation pratiquement identique.

25. Séparateur de particules selon l'une des revendications 18 à 24,
**caractérisé en ce que**
le paquet de plaques a au moins en partie un profil ondulé (18) essentiellement transversal et/ou longitudinal par rapport à la direction d'écoulement et des plaques de séparateur (17) formant une couche ondulée.

26. Séparateur de particules selon la revendication 25,
**caractérisé en ce que**
les plaques de séparateur (17) réalisant une couche ondulée, sont écartées l'une de l'autre dans la direction de l'écoulement de préférence avec un écartement identique et pratiquement dirigées transversalement à la direction d'écoulement, le profil ondulé (18) et ainsi le profil longitudinal des canaux d'écoulement réalisés par le profil ondulé (18), ont des rétrécissements (19) réalisant des interruptions.

27. Séparateur de particules selon la revendication 25 ou 26,
**caractérisé en ce qu'**
une plaque de séparateur (17) en forme de couche ondulée comporte dans la zone latérale en amont ou en aval de chaque rétrécissement (19), au moins un orifice traversant (8) pour la veine des gaz d'échappement.

28. Séparateur de particules selon la revendication 26 ou 27,
**caractérisé en ce que**
les rétrécissements (19) successifs lorsque vus dans la direction d'écoulement, rétrécissent le profil ondulé (18) alternativement à partir du côté supérieur et à partir du côté inférieur.

29. Séparateur de particules selon l'une des revendications 25 à 28,
**caractérisé en ce que**
les différentes zones d'écoulement (5, 6) sont formées par des amplitudes différentes et/ou des fréquences différentes du profil ondulé (18) au moins d'une plaque de séparateur (17) réalisant une couche ondulée.

30. Séparateur de particules selon l'une des revendications 25 à 29,
**caractérisé en ce que**
les différentes zones d'écoulement (5, 6) sont formées par des amplitudes différentes et/ou des fréquences différentes du profil ondulé (18) de plaques de séparateur (17) formant une couche ondulée.

31. Séparateur de particules selon l'une des revendications 25 à 30,
**caractérisé en ce que**
le paquet plan de plaques comporte des plaques de séparateur (20) réalisées sous la forme d'une couche lisse alternant de préférence avec des plaques de séparateur (17) ayant un profil ondulé (18) et réalisant une couche ondulée.

32. Séparateur de particules selon l'une des revendications 7 à 31,
**caractérisé en ce que**
les orifices traversants (8) sont réalisés notamment le long de la direction d'écoulement (x), au moins en partie avec une forme et/ou une dimension différentes.

33. Séparateur de particules selon l'une des revendications 1 à 32,
**caractérisé en ce qu'**
au moins un séparateur de particules avec au moins une installation de catalyseurs sont montés dans un pot amortisseur d'une installation de gaz d'échappement.

34. Procédé de séparation de particules d'une veine de gaz d'échappement d'un moteur à combustion selon lequel une veine de gaz d'échappement traverse un séparateur de particules, notamment un séparateur de particules selon l'une des revendications 1 à 34, au moins par zones, et des zones d'écoulement (5, 6) différentes sont réalisées dans le séparateur de particules (1) du point de vue des conditions d'écoulement, dans les différentes zones d'écoulement (5, 6), se déposent principalement des particules (3, 4) de plage de dimensions définie et/ou de masses différentes, définies,
**caractérisé en ce que**
la vitesse d'écoulement et/ou le temps de séjour d'une veine de gaz d'échappement ou d'une partie de veine de gaz d'échappement, sont prévus dans différentes zones d'écoulement,
un premier groupe de zones d'écoulement (6) retient principalement les particules fines (3) de dimensions définies en procédant par diffusion et au moins un autre groupe de zones d'écoulement (5) retient des particules grossières (4) plus grandes et/ou plus lourdes principalement par rapport aux particules fines (3) en utilisant leur inertie.

35. Procédé selon la revendication 34,
**caractérisé en ce que**
dans une zone d'écoulement à grande vitesse (5), on dévie une veine de gaz d'échappement ayant une vitesse d'écoulement élevée, prédéfinie, de sorte que les particules grossières (4) d'une certaine dimension et/ou d'un certain poids, ne peuvent plus suivre la veine des gaz d'échappement à cause de leur inertie et se déposent notamment dans une installation de collecte de particules et/ ou de stockage de particules (11), et une zone d'écoulement à vitesse faible (6) avec une vitesse d'écoulement faible, est traversée par une veine de gaz d'échappement en étant retardée de façon que par rapport aux particules grossières (4), les particules fines (3) plus petites et/ou plus légères, soient séparées de la veine des gaz d'échappement par diffusion.

36. Procédé selon la revendication 34 ou 35,
**caractérisé en ce que**
les particules contenant du carbone et qui se sont déposées dans le séparateur de particules (1), sont oxydées à l'aide de NO₂ formé par un autre catalyseur par oxydation le monoxyde d'azote NO.

37. Procédé selon l'une des revendications 34 à 36,
**caractérisé en ce que**
les particules contenant du carbone déposées dans le séparateur de particules (1) sont oxydées par relèvement de la température des gaz d'échappement.
